# DEMANDE DE BREVET EUROPEEN

(11) **EP 3 431 567 A1**
(43) Date de publication de la demande: **23.01.2019**
(21) Numéro de dépôt: 18184116.4
(22) Date de dépôt: 18.07.2018
(51) Int. Cl.: C09K 3/18, B60S 1/48

(54) **LIQUIDE DE DEGIVRAGE DE VITRE DE VEHICULE AUTOMOBILE, PROCEDE DE DEGIVRAGE ET PROCEDE D'ACHEMINEMENT DU LIQUIDE DE DEGIVRAGE**

(30) Priorité: 21.07.2017 FR 1756933
(71) Demandeur: Valeo Systèmes d'Essuyage, 78322 Le Mesnil Saint Denis (FR)
(72) Inventeur: THEBAULT, Denis, 63500 ISSOIRE (FR); KOLANOWSKI, Grégory, 63500 ISSOIRE (FR); NOEL, Amélie, 63500 ISSOIRE (FR)
(74) Mandataire: Valeo Systèmes d'Essuyage

(57) **Abrégé**

L'invention concerne un liquide de dégivrage pour véhicule automobile comprenant :
- au moins un sel métallique alcalin, le pourcentage massique de la totalité du au moins un sel métallique alcalin, dans le liquide, étant compris entre 0,0001% et 50%,
- et au moins de l'eau, le pourcentage massique de l'eau dans le liquide étant compris entre 0,0001% et 99,9999%.

## Description

### DOMAINE TECHNIQUE

La présente invention concerne un liquide de dégivrage, notamment pour véhicule automobile.

Le givre est composé d'une multitude de gouttelettes d'eau gelées dès que la température extérieure est inférieure à zéro degré Celsius. Généralement, ces gouttelettes ont peu ou pas de cohésion entre elles.

### ETAT DE L'ART

On connaît des liquides de dégivrage utilisés pour dégivrer la surface extérieure d'une vitre de véhicule automobile telle qu'un pare-brise. Ces liquides de dégivrage permettent de faire fondre le givre formé sur le pare-brise du véhicule. Il existe cependant un besoin d'amélioration de ces liquides de dégivrage.

On connaît, par ailleurs, des liquides de dégivrage conçus pour le dégel des routes en hiver. Le document US 2004/0119043 A1 divulgue un tel liquide de dégivrage. Cependant, ces liquides se prêtent peu à une utilisation pour un véhicule automobile.

Pour le dégivrage, les véhicules automobiles peuvent comprendre des systèmes de projection utilisant notamment des pompes de liquide de lave-glace. Le liquide de dégivrage doit donc être compatible avec l'utilisation de ces pompes de liquide lave-glace. Il existe donc un besoin de disposer d'un liquide de dégivrage présentant des propriétés physiques, notamment de viscosité, compatibles avec une utilisation dans un système d'essuyage de vitre d'un véhicule automobile.

L'un des objets de l'invention est de répondre à ces besoins.

### BREVE DESCRIPTION DES FIGURES

L'invention sera mieux comprise, et d'autres buts, détails, caractéristiques et avantages de celle-ci apparaîtront plus clairement au cours de la description détaillée qui va suivre en référence aux dessins annexés dans lesquels:
- Les figures 1 à 5 sont des vues schématiques d'une partie d'un pare-brise d'un véhicule automobile lors de différentes étapes d'un procédé de dégivrage selon l'invention ; et
- La figure 6 est une vue d'une partie d'un pare-brise et d'un dispositif d'acheminement d'un liquide de dégivrage.

### EXPOSE DE L'INVENTION

L'invention propose un liquide de dégivrage pour véhicule automobile comprenant :
- au moins un sel métallique alcalin, le pourcentage massique de la totalité du au moins un sel métallique alcalin, dans le liquide, étant compris entre 0,0001% et 50%,
- et au moins de l'eau, le pourcentage massique de l'eau dans le liquide étant compris entre 0,0001% et 99,9999%.

Dans la présente demande on entend par pourcentage massique d'un composant le rapport que représente la masse de ce composant sur la masse totale du liquide de dégivrage.

Grâce à cette formulation, le liquide de dégivrage selon l'invention a un pouvoir dégivrant fort tout en ayant des propriétés physiques qui permettent son utilisation pour le dégivrage d'un véhicule automobile.

Le liquide de dégivrage est destiné à être distribué, aspergé et/ou projeté sur la surface, notamment extérieure, d'une vitre d'un véhicule automobile lorsque celle-ci est recouverte, au moins partiellement, d'une couche de givre.

Le liquide de dégivrage, destiné à être distribué sur une surface extérieure d'une vitre d'un véhicule automobile, recouverte au moins partiellement d'une couche de givre, est caractérisé en ce que le point de congélation d'un mélange comprenant du givre et le liquide de dégivrage est inférieur au point de congélation du givre seul. De la sorte, la distribution et/ou la projection du liquide de dégivrage sur la vitre du véhicule permet d'y faire fondre le givre présent.

Le point de congélation du mélange comprenant du givre et du liquide de dégivrage est par exemple inférieur ou égal à - 20 degrés Celsius.

En outre, le liquide de dégivrage permet également d'empêcher ou, tout du moins, de ralentir une formation et/ou une reformation du givre notamment après que le liquide de dégivrage ait été distribué sur la surface extérieure de la vitre. Autrement dit, le liquide de dégivrage est conçu de manière à éviter une reprise du gel sur la vitre notamment de sorte que la visibilité soit durablement préservée pour le conducteur.

Le liquide de dégivrage peut par exemple également être utilisé pour faire fondre de la neige sur la surface extérieure de la vitre.

Le point de congélation du liquide de dégivrage est notamment fonction de sa concentration en sel métallique alcalin.

Selon l'invention, le pourcentage massique de la totalité du au moins un sel métallique alcalin, dans le liquide, est inférieur à 50%. Autrement dit, dans le cas où le liquide de dégivrage comprend plusieurs sels métalliques alcalins, la somme des pourcentages massiques de chacun des sels métalliques alcalins est inférieure ou égale à 50%.

De préférence, le pourcentage massique de la totalité du au moins un sel métallique alcalin est compris entre 30% et 50%. Mieux, le pourcentage massique de la totalité du au moins un sel métallique alcalin est compris entre 40% et 50%. Mieux encore, le pourcentage massique de la totalité du au moins un sel métallique alcalin est compris entre 45% et 50%.

Dans le liquide de dégivrage, l'un du au moins un sel métallique alcalin peut être du formiate de potassium.

Le liquide de dégivrage peut comprendre au moins deux sels métalliques alcalins. En particulier, le liquide de dégivrage peut comprendre un mélange de plusieurs sels métalliques alcalins dont du formiate de potassium ou d'autres sels de potassium comme de l'acide formique, de l'acétate, du succinate et/ou du formiate d'ion métallique sans que cette énumération soit limitative.

Sans que l'on sorte du cadre de l'invention, le liquide de dégivrage peut comprendre un unique sel métallique alcalin, en particulier du formiate de potassium. En variante, il peut s'agir d'un autre sel métallique alcalin. Le pourcentage massique de l'unique sel métallique alcalin est par exemple compris entre 45% et 50%.

Le liquide de dégivrage peut en outre comprendre un agent antigel destiné à empêcher la formation et/ou la reformation du givre. L'agent antigel permet avantageusement le dépôt d'un film gras sur la surface de la vitre de manière à empêcher ou à ralentir la formation ou la reformation de givre sur la surface. Avantageusement, l'adjonction de l'agent antigel permet aussi d'abaisser le point de congélation du liquide de dégivrage.

Le pourcentage massique de l'agent antigel est par exemple compris entre 0,0001% et 5%. L'agent antigel est par exemple de l'éthylène de glycol, du glycérol, du propylène glycol, du méthanol ou un mélange de ces produits. De préférence, l'agent antigel possède une masse molaire de 84 g.mol⁻¹.

Le liquide de dégivrage peut en outre comprendre un agent parfumant. L'agent parfumant comprend par exemple de la S-Limonène. Le pourcentage massique de l'agent parfumant dans le liquide de dégivrage est par exemple compris entre 0,0001% à 5%. De préférence, le pourcentage massique de l'agent parfumant est compris entre 0,0001% et 0,3% voire entre 0,05% et 0,2%.

Le liquide de dégivrage peut en outre comprendre un agent anticorrosion. L'agent anticorrosion est conçu pour empêcher une corrosion d'un récipient du liquide de dégivrage ou d'un circuit de distribution de celui-ci ou encore d'éléments du pare-brise du véhicule automobile. En particulier, l'agent anticorrosion est notamment destiné à empêcher une oxydation d'éléments métalliques du véhicule automobile.

L'agent anticorrosion peut être par exemple du phosphate, du borate ou du silicate ou un mélange de ces produits. Le pourcentage massique de l'agent anticorrosion est par exemple compris entre 0,0001% et 3%.

Le liquide de dégivrage peut être dépourvu de tout autre solvant que l'eau. Autrement dit, le liquide de dégivrage ne comprend alors pas d'autre solvant que l'eau.

En variante, le liquide de dégivrage peut comprendre en outre un autre solvant que l'eau. Le pourcentage massique de cet autre solvant est par exemple compris entre 0,0001% et 5%. Le liquide de dégivrage peut aussi comprendre plusieurs solvants autres que l'eau. Le pourcentage massique de la totalité des solvants autres que l'eau dans le liquide de dégivrage est alors compris entre 0,0001% et 5%.

Le solvant autre que l'eau dans le liquide de dégivrage permet par exemple de conférer au liquide de dégivrage un pouvoir lavant et/ou solubilisant. Il peut en outre permettre de diminuer la tension superficielle du liquide de dégivrage. Autrement dit, le solvant peut permettre d'augmenter le pouvoir mouillant du liquide de dégivrage. Le solvant peut en outre permettre un abaissement du point de congélation du liquide de dégivrage.

En particulier, le liquide de dégivrage peut notamment comprendre du glycol ou un composé appartenant à la famille des glycols. Le glycol ou le composé appartenant à la famille des glycols peuvent constituer l'autre solvant.

Le liquide de dégivrage peut par exemple comprendre du 1-methoxy-2-propanol ou du dipropylène glycol monomethyl éther pouvant être utilisé afin de d'abaisser le point de congélation du liquide de dégivrage.

Le liquide de dégivrage peut par exemple comprendre un agent de viscosité destiné à modifier par son adjonction la viscosité du liquide de dégivrage.

Avantageusement, le liquide de dégivrage présente une faible viscosité. De préférence, le liquide de dégivrage présente une viscosité à froid, en particulier à - 15 degrés Celsius, inférieure ou égale à 10 millipascal-seconde (10 mPa.s). La viscosité du liquide de dégivrage à - 15 degrés Celsius est par exemple inférieure ou égale à 8 mPa.s. En variante, la viscosité du liquide de dégivrage est par exemple inférieure ou égale à 10 millipascal-seconde (10 mPa.s) à une température de - 20 degrés Celsius.

La faible viscosité du liquide de dégivrage permet au liquide de dégivrage d'être entraîné, quelle que soit la température ambiante, et notamment à des températures négatives, par une pompe de liquide lave-glace d'un véhicule automobile, le liquide de dégivrage étant à température ambiante.

De préférence, le liquide de dégivrage est conçu de telle manière que son point de congélation est inférieur ou égal à - 20 degrés Celsius. En particulier, le point de congélation du liquide de dégivrage est compris entre - 20 degrés Celsius et - 30 degrés Celsius. En variante, le point de congélation du liquide de dégivrage est par exemple inférieur ou égal à - 30 degrés Celsius.

Nous avons décrit dans la suite un exemple de liquide de dégivrage conforme à l'invention.

Le liquide de dégivrage comprend par exemple du formiate de potassium, le pourcentage massique du formiate de potassium étant compris entre 45% et 50% du liquide de dégivrage. Le point de congélation du liquide de dégivrage est ici inférieur à - 30 degrés Celsius. Sa viscosité, à une température de moins 20 degrés Celsius, est inférieure ou égale à 10 mPa.s. Le liquide de dégivrage comprend en outre un agent antigel dont le pourcentage massique dans le liquide dégivrage est compris entre 0,0001% et 5%. Le liquide de dégivrage comprend en outre un agent anticorrosion dont le pourcentage massique dans le liquide de dégivrage est inférieur à 3%.

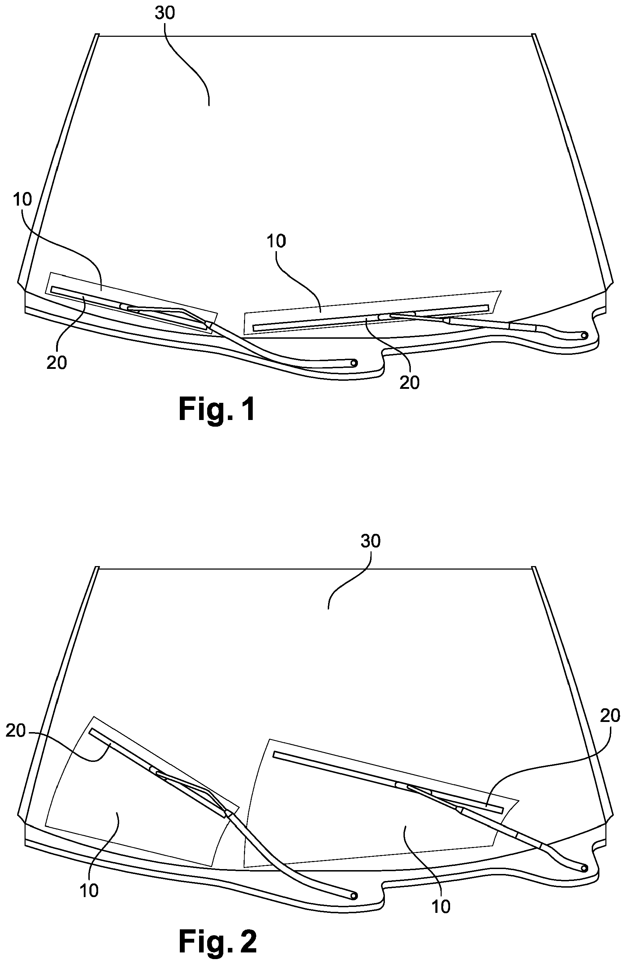

Comme illustré aux figures 1 à 5, l'invention concerne aussi un procédé de dégivrage d'une surface extérieure 30 d'une vitre de véhicule automobile, le véhicule étant muni d'au moins un balai d'essuyage 20, ici deux balais d'essuyage 20. Ce procédé de dégivrage comprend successivement et par exemple dans cet ordre une étape A), une étape B) et une étape C).
- L'étape A) est une étape de distribution d'un liquide de dégivrage 10 selon l'invention sur la surface extérieure 30. Au cours de l'étape A), de préférence, les balais d'essuyage 20 ne sont pas déplacés.
- L'étape B) est une étape de temporisation pendant laquelle les balais d'essuyage 20 ne sont pas déplacés. Au cours de l'étape B), de préférence, aucune distribution de liquide de dégivrage n'a lieu.
- L'étape C) est illustrée à la figure 2. L'étape C) consiste en un déplacement des balais d'essuyage 20 d'une première position P1 vers une deuxième position P2. De préférence, l'étape C) de déplacement a lieu en même temps qu'une distribution du liquide de dégivrage 10 sur la surface extérieure 30. De préférence, la première position P1 correspond à la position extrême basse des balais d'essuyage 20 sur le pare-brise, tandis que la deuxième position P2 correspond à la position extrême haute des balais d'essuyage 20 sur le pare-brise.

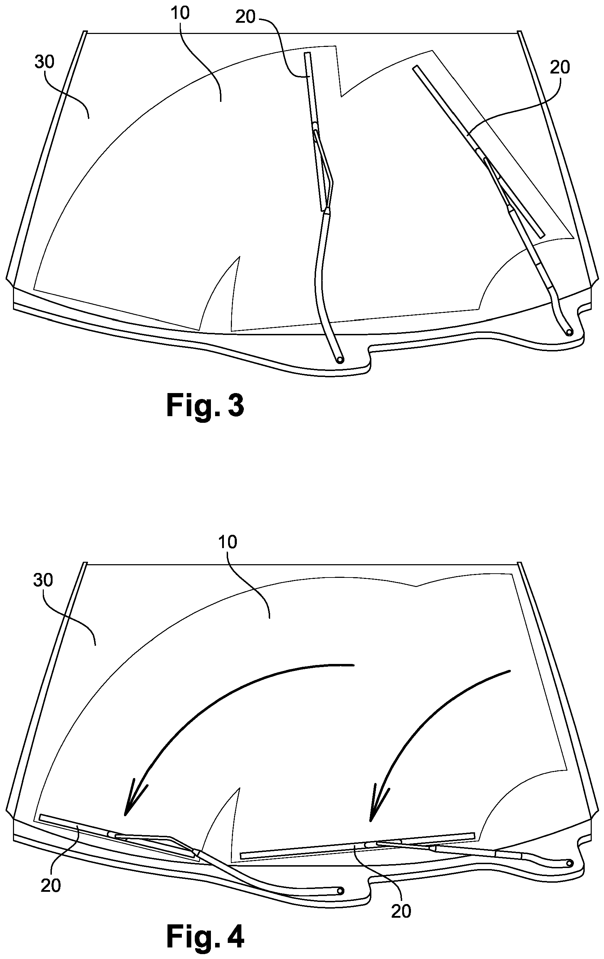

L'étape C) est par exemple suivie successivement d'une étape D) et d'une étape E).
- L'étape D) est illustrée à la figure 3. Il s'agit d'une étape de temporisation pendant laquelle les balais d'essuyage 20 ne sont pas déplacés. Au cours de l'étape D), de préférence, aucune distribution de liquide de dégivrage n'a lieu.
- L'étape E) est illustrée à la figure 4. Il s'agit d'une étape de déplacement des balais d'essuyage 20 depuis la deuxième position P2 vers la première position P1. De préférence, l'étape E) a lieu en même temps qu'une distribution du liquide de dégivrage (10) sur la surface extérieure. Alternativement, Au cours de l'étape E), aucune distribution de liquide de dégivrage n'a lieu.

On notera que le déplacement des balais d'essuyage 20 durant l'étape C) est par exemple séquencé. Autrement dit, les balais d'essuyage 20 se déplacent de la première position P1 vers une deuxième position P2 en plusieurs déplacements successifs, les balais 20 étant immobilisés quelques secondes entre les déplacements successifs. Alternativement, durant l'étape C), les balais d'essuyage 20 se déplacent à une vitesse inférieure à celle des balais d'essuyage durant l'étape E).

La durée de temporisation de chacune des étapes B) et/ou D) est par exemple comprise entre 10 secondes et 1 minute. Par exemple, la durée de temporisation de chacune des étapes B) et D) est approximativement de 30 secondes. Les étapes de temporisation permettent notamment de laisser agir le liquide de dégivrage 10 sur la surface extérieure 30. En particulier, les étapes de temporisation permettent d'attendre la fonte du givre ou d'une partie du givre avant une mise en mouvement des balais d'essuyage 20.

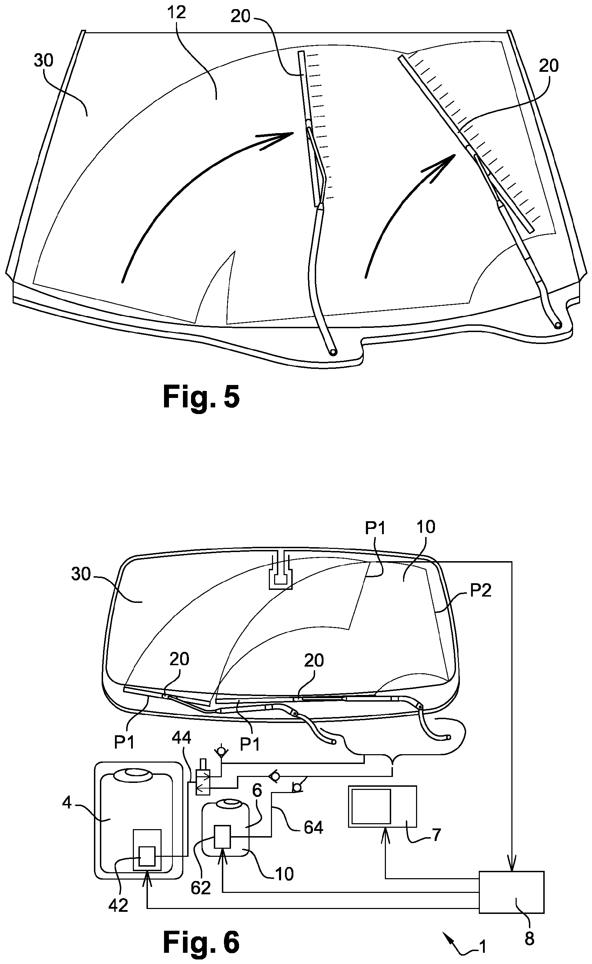

Le procédé de dégivrage peut en outre comprendre une étape de rinçage. L'étape de rinçage est illustrée à la figure 5. Elle consiste par exemple en une distribution d'un liquide lave-glace 12 ou en une distribution d'eau sur la surface extérieure 30, le liquide lave-glace 12 ou l'eau faisant fonction de liquide de rinçage.

L'étape A) peut être précédée ou remplacée par une étape X). L'étape X), illustrée à la figure 1, consiste en une distribution du liquide de dégivrage 10 dans les zones de la surface extérieure 30 occupées par les balais d'essuyage 20 du véhicule automobile. Généralement, il s'agit de zones situées dans une partie inférieure de la surface extérieure où se trouve le balai d'essuyage (20) en position de repos. Autrement dit, le liquide de dégivrage 10 est distribué, pendant l'étape X), sur la surface extérieure 30 autour d'une interface ou d'une zone de contact entre d'une part les balais d'essuyage 20 et d'autre part la surface extérieure 30 ou le givre recouvrant la surface extérieure 30.

En effet, lorsque du givre est présent sur la surface extérieure 30, les balais d'essuyage 20 sont parfois collés à celle-ci ou retenus par le givre. L'étape X permet le cas échéant de décoller ou de débloquer les balais d'essuyage 20 de la surface extérieure 30 avant qu'ils ne soient actionnés et afin d'éviter leur altération.

La figure 6 illustre un dispositif d'acheminement 1 du liquide de dégivrage 10 depuis un réservoir 6 jusqu'à la surface extérieure 30 du véhicule automobile.

Ce dispositif 1 comprend un réservoir 6 de liquide de dégivrage destiné à contenir du liquide de dégivrage 10 et un réservoir 4 de liquide lave-glace destiné à contenir du liquide lave-glace 12.

Le réservoir 6 de liquide de dégivrage est connecté via un premier circuit à des moyens de projection. Autrement dit, le premier circuit est conçu pour relier le réservoir 6 de liquide de dégivrage aux moyens de projections. Le premier circuit comprend une canalisation 64 et une pompe 62. La pompe 62 permet de faire circuler le liquide de dégivrage 10 à l'intérieur de la canalisation 64 depuis le réservoir 6 de liquide de dégivrage 10 vers les moyens de projections.

Le réservoir 4 de liquide lave-glace est connecté via un deuxième circuit à des moyens de projection. Autrement dit, le deuxième circuit est conçu pour relier le réservoir 4 de liquide lave-glace aux moyens de projections. Le deuxième circuit comprend une canalisation 44 et une pompe 42. La pompe 42 permet de faire circuler le liquide lave-glace 12 à l'intérieur de la canalisation 44 depuis le réservoir 4 de liquide lave-glace 12 vers les moyens de projections.

Les moyens de projection sont conçus pour permettre une pulvérisation, une projection et/ou une distribution du liquide de dégivrage 10 et/ou du liquide lave-glace 12 vers une partie de la surface extérieure 30. Les moyens de projection sont par exemple agencés sur un capot du véhicule automobile ou directement sur les balais d'essuyage 20 ou directement sur les bras supportant les balais d'essuyage 20.

Ce dispositif 1 comprend en outre un boitier de commande 8. Le boitier de commande 8 est connecté à chacune des pompes 42, 62 précédemment décrites. Il permet l'actionnement des pompes 42, 62.

Le boitier de commande 8 est en outre connecté à un moteur d'actionnement 7 des balais d'essuyage 20. Le boitier de commande 8 est ainsi conçu de manière à permettre un pilotage du déplacement des balais d'essuyage 20.

L'invention concerne encore un procédé d'acheminement du liquide dégivrage 10. Ce procédé d'acheminement est caractérisé en ce qu'il consiste à :
- aspirer le liquide dégivrage 10 depuis le réservoir 6 de liquide de dégivrage,
- faire circuler le liquide de dégivrage 10 dans la canalisation 64 du premier circuit,
- projeter ou asperger le liquide de dégivrage 10 sur la surface extérieure 30.

## Revendications

1. Liquide de dégivrage (10) pour véhicule automobile comprenant :
- au moins un sel métallique alcalin, le pourcentage massique de la totalité du au moins un sel métallique alcalin, dans le liquide (10), étant compris entre 0,0001% et 50%,
- et au moins de l'eau, le pourcentage massique de l'eau dans le liquide (10) étant compris entre 0,0001% et 99,9999%.

2. Liquide de dégivrage (10) selon la revendication précédente dans lequel le pourcentage massique de la totalité du au moins un sel métallique alcalin est compris entre 30% et 50%, de préférence le pourcentage massique de la totalité du au moins un sel métallique alcalin est compris entre 40% et 50%, plus particulièrement le pourcentage massique de la totalité du au moins un sel métallique alcalin est compris entre 45% et 50%.

3. Liquide de dégivrage (10) selon l'une quelconque des revendications précédentes dans lequel l'un du au moins un sel métallique alcalin est du formiate de potassium, de préférence le liquide de dégivrage comprend un seul sel métallique alcalin qui est du formiate de potassium dont le pourcentage massique est compris entre 45% et 50%.

4. Liquide de dégivrage (10) selon l'une quelconque des revendications précédentes comprenant au moins deux sels métalliques alcalins.

5. Liquide de dégivrage (10) selon l'une quelconque des revendications précédentes comprenant en outre :
- un agent antigel destiné à empêcher la formation et/ou la reformation de givre, de préférence le pourcentage massique de l'agent antigel est compris entre 0,0001% et 5%.

6. Liquide de dégivrage (10) selon l'une quelconque des revendications précédentes comprenant en outre :
- un agent anticorrosion, de préférence le pourcentage massique de l'agent anticorrosion est compris entre 0,0001% et 3%.

7. Liquide de dégivrage (10) selon l'une quelconque des revendications précédentes comprenant en outre :
- un autre solvant que l'eau, de préférence le pourcentage massique de l'autre solvant est compris entre 0,0001% à 5%.

8. Liquide de dégivrage (10) selon l'une quelconque des revendications précédentes comprenant en outre du glycol ou un composé appartenant à la famille des glycols.

9. Liquide de dégivrage (10) selon l'une quelconque des revendications 1 à 6, ledit liquide de dégivrage (10) ne comprenant pas d'autre solvant que l'eau.

10. Liquide de dégivrage (10) selon l'une quelconque des revendications précédentes, **caractérisé en ce que** la viscosité du liquide de dégivrage (10) est inférieure ou égale à 10 milli pascal-seconde (mPa.s) à une température de - 20 degrés Celsius.

11. Liquide de dégivrage (10) selon l'une quelconque des revendications précédentes, **caractérisé en ce que** le point de congélation du liquide de dégivrage est inférieur ou égal à - 20 degrés Celsius, de préférence le point de congélation du liquide de dégivrage (10) est inférieur ou égal à - 30 degrés Celsius.

12. Liquide de dégivrage (10) selon l'une quelconque des revendications précédentes, destiné à être distribué sur une surface extérieure (30) d'une vitre d'un véhicule automobile, recouverte au moins partiellement d'une couche de givre, le liquide de dégivrage (10) étant **caractérisé en ce que** le point de congélation d'un mélange comprenant du givre et le liquide de dégivrage (10) est inférieur au point de congélation du givre seul, de préférence le point de congélation dudit mélange est inférieur ou égal à - 20 degrés Celsius.

13. Procédé de dégivrage d'une surface extérieure (30) d'une vitre de véhicule automobile, la surface extérieure (30) étant munie d'un balai d'essuyage (20), le procédé de dégivrage comprenant successivement :
- une étape A de distribution d'un liquide de dégivrage selon l'une quelconque des revendications précédentes sur la surface extérieure (30), de préférence lors de l'étape A le balai d'essuyage (20) n'est pas déplacé,
- Une étape B de temporisation pendant laquelle le balai d'essuyage (20) n'est pas déplacé et aucune distribution du liquide de dégivrage (10) sur la surface extérieure n'a lieu,
- Une étape C de déplacement du balai d'essuyage (20) d'une première position à une deuxième position, de préférence l'étape C de déplacement a lieu en même temps qu'une distribution du liquide de dégivrage (10) sur la surface extérieure.

14. Procédé de dégivrage selon la revendication précédente dans lequel l'étape C est suivie successivement :
- d'une étape D de temporisation pendant laquelle le balai d'essuyage (20) n'est pas déplacé et aucune distribution du liquide de dégivrage (10) sur la surface extérieure n'a lieu,
- d'une étape E de déplacement du balai d'essuyage (20) de la deuxième position à la première position.

15. Procédé d'acheminement d'un liquide dégivrage (10) selon l'une quelconque des revendications 1 à 12 **caractérisé en ce que** la distribution consiste à:
- aspirer le liquide dégivrage (10) depuis un réservoir (6),
- faire circuler le liquide dégivrage (10) dans une canalisation (64),
- projeter ou asperger le liquide de dégivrage (10) sur la surface extérieure (30) de la vitre.
